# FASCICULE DE BREVET EUROPEEN

(11) **EP 2 371 514 B1**
(45) Date de publication et mention de la délivrance du brevet: **29.10.2014**
(21) Numéro de dépôt: 11004006.0
(22) Date de dépôt: 29.05.2007
(51) Int. Cl.: B29C 45/16

(54) **Procédé de fabrication d'une pièce injectée, et dispositif pour la mise en oeuvre de ce procédé**
Herstellungsverfahren eines Spritzgussteils, und Vorrichtung für die Umsetzung dieses Verfahrens
Method for manufacturing an injected part, and device for implementing said method

(30) Priorité: 29.05.2006 FR 0604768
(43) Date de publication de la demande: 05.10.2011
(62) Demande divisionnaire de: 07765962.1
(73) Titulaire: Plastigray S.A.S., 70100 Gray (FR)
(72) Inventeur: Savin, Thierry, 70100 Arc les Gray (FR); Bouvier, Jean-Robert, 70100 Gray (FR)
(74) Mandataire: Nithardt, Roland

(56) Documents cités:
- WO-A1-03/031142
- DE-A1- 10 055 691
- JP-A- 8 118 418
- JP-A- 11 207 780
- US-A- 5 667 819
- US-A- 6 068 896
- US-A1- 2003 234 473
- JAROSCHEK C: "PASSGENAUE VERTEILUNG DES KERNMATERIALS", KUNSTOFFE INTERNATIONAL, CARL HANSER VERLAG, MUNCHEN, DE, 1 May 2004 (2004-05-01), pages 68-71, XP001182857, ISSN: 0023-5563

## Description

La présente invention concerne un procédé de fabrication d'une pièce injectée réalisée en au moins deux matières thermoplastiques ayant des caractéristiques physiques différentes, dans lequel on injecte simultanément ou séquentiellement dans une empreinte de moule correspondant à ladite pièce au moins une première matière thermoplastique pour constituer une peau extérieure de la pièce et au moins une deuxième matière thermoplastique pour constituer un coeur de la pièce entouré de ladite peau, ces matières étant injectées par des buses d'injection distinctes à commande indépendante.

Elle concerne également un dispositif pour la mise en oeuvre du procédé ci-dessus, comportant des moyens pour injecter simultanément ou séquentiellement dans une empreinte de moule correspondant à ladite pièce au moins une première matière thermoplastique pour constituer une peau extérieure de la pièce et au moins une deuxième matière thermoplastique pour constituer un coeur de la pièce entouré de ladite peau, ces moyens comprenant des buses d'injection distinctes à commande indépendante.

Une pièce injectée est réalisée en au moins deux matières thermoplastiques ayant des caractéristiques physiques différentes, ces matières thermoplastiques comportant au moins une première matière thermoplastique élastomère pour constituer une peau extérieure de la pièce et au moins une deuxième matière thermoplastique de remplissage pour constituer un coeur de la pièce entouré de ladite peau, selon le procédé ci-dessus.

La technique dite de l'injection sandwich consiste à injecter dans un moule simultanément ou séquentiellement deux polymères dont l'un forme la couche extérieure appelée peau et l'autre la partie centrale appelée coeur d'une pièce composite. Les polymères peuvent se présenter sous une forme solide ou une forme expansée ou sous une forme combinée. Les polymères peuvent être expansés par adjonction d'un agent porogène ou d'un gaz inerte ou par l'utilisation combinée de ces deux types de composants.

Le procédé d'injection sandwich s'effectue habituellement au moyen de presses bi-injection. Les unités d'injection sont équipées d'un bloc distributeur pourvu de canaux d'alimentation. La buse d'injection peut comporter un seul canal qui transfère les polymères à travers le même canal qui est alors équipé d'une vanne à trois voies permettant les séquences d'injection d'une pièce composite. La buse d'injection peut également comporter deux canaux dont l'ouverture et la fermeture peuvent être gérées par une commande hydraulique (procédé dit hydraulique), ce qui autorise une grande liberté de manoeuvre dans les réglages, ou dont l'ouverture et la fermeture peuvent être gérées par utilisation des pressions d'injection respectives des deux unités (procédé dit par pression). L'injection peut être séquentielle ou simultanée. Dans le cas de l'injection séquentielle, on commence par injecter, au cours d'une première phase, la matière de la peau, ensuite, au cours d'une deuxième phase, on injecte la matière du coeur et finalement, au cours d'une troisième phase on injecte à nouveau la matière de la peau, notamment pour fermer la pièce et emprisonner entièrement le coeur en ne laissant apparaître extérieurement que la peau, mais aussi pour rincer la buse d'injection de la matière du coeur. Dans le cas de l'injection simultanée, on commence par injecter, au cours d'une première phase, simultanément la matière de la peau et la matière du coeur, ensuite, au cours d'une deuxième phase, on injecte la matière du coeur et finalement, au cours d'une troisième phase on injecte à nouveau la matière de la peau pour les mêmes raisons que précédemment. L'injection simultanée donne un aspect de surface plus satisfaisant que l'injection séquentielle par le fait qu'il n'y a pas d'interruption de la phase de remplissage créant une marque d'hésitation sous la forme d'un défaut de brillance sur la pièce.

Pour la réalisation de pièces minces de relativement grande surface, telles que par exemple des tapis ou des pièces d'habillage pour véhicules automobiles, la matière de la peau doit être un thermoplastique élastomère ayant des caractéristiques physiques spécifiques en ce qui concerne l'aspect, la consistance, la densité, la résistance mécanique, l'adhérence, la souplesse ou la rigidité, etc. qui font que cette matière est coûteuse et engendre un renchérissement de la pièce finale. En outre, les exigences pour ce type de pièces peuvent être telles que le produit final devient complexe et devrait, par exemple, présenter des zones ayant des caractéristiques physiques distinctes, telles que des zones très souples et des zones rigides ou semi-rigides, des zones ayant une bonne adhérence et des zones dont la surface est lisse. Pour ces raisons, les procédés d'injection connus ne se prêtent pas à la réalisation de ces pièces qui sont à la fois trop coûteuses et ne présentent pas les caractéristiques physiques requises.

La publication WO 99/51416 tente d'apporter une solution en proposant un procédé d'injection sandwich utilisant deux buses d'injection distinctes, qui débouchent directement dans l'empreinte d'un moule en différents points d'injection, situés soit dans la face soit dans l'épaisseur de la pièce. On parle dans ce cas d'une injection « pleine peau » qui présente l'inconvénient majeur de créer sur la pièce des défauts d'aspect en forme d'auréoles brillantes au niveau des points d'injection, ce qui n'est pas acceptable pour une pièce de finition. Ce procédé d'injection permet également la possibilité de réaliser simultanément des clips de fixation intégrés à la pièce au moyen d'un système à tiroir mobile à l'intérieur de l'empreinte du moule. Toutefois, cette technique est complexe à mettre en oeuvre dans un procédé de co-injection, le mouvement du tiroir générant des défauts d'aspect dans la matière de peau de la pièce. Le résultat esthétique est donc plus qu'incertain, non maîtrisé et non reproductible.

On retrouve les mêmes inconvénients dans le procédé de co-injection décrit dans la publication US 5,651,998 liés à une injection « pleine peau ».

Le dispositif d'injection décrit dans la publication DE 100 55 691 est complexe et coûteux puisqu'il comporte deux systèmes d'alimentation pour chaque matière, à savoir un système d'alimentation par bloc chaud et un système d'alimentation par canal froid formant une carotte. Le système d'alimentation par bloc chaud comporte des buses à obturation et le canal froid est équipé d'un obturateur commandé par des vérins. La combinaison de ces deux systèmes d'alimentation rend l'un des deux inutiles.

Par ailleurs, la publication JP 11 207780 décrit un dispositif à masselotte à ressort permettant d'ajuster la position de la matière de coeur à l'intérieur de la matière de peau pour des pièces de fortes épaisseurs. Le ressort a pour objectif de générer une contre-pression dans l'empreinte afin d'améliorer la qualité du remplissage. Or, en fin de processus, la réinjection de la matière de peau génère automatiquement un remplissage à l'intérieur de la matière de coeur, ce qui n'est pas souhaité.

L'article de Christoph Jaroschek « Passgenaue Verteilung des Kernmaterials » Kunstoffe International, Carl Hanser Verlag, München, DE, 1 mai 2004, pages 68-71, XP001182857, ISSN :0023-5563 propose une solution de co-injection bi-matière dans un canal d'alimentation froid en communication avec une empreinte et combiné à des obturateurs commandés par des vérins.

La présente invention se propose de pallier ces inconvénients en offrant un procédé d'injection simple, économique et très souple, qui permet de réaliser des pièces relativement économiques pour ce qui est de leur fabrication, et répondant aux exigences des utilisateurs aussi bien en termes de caractéristiques techniques différenciées en fonction des zones de la pièce considérées, qu'en termes d'aspect de surface de grande qualité esthétique.

Ce but est atteint par le procédé tel que défini dans la revendication 1.

On réalise ainsi une injection des matières thermoplastiques par voie indirecte, par l'intermédiaire de ce canal froid d'alimentation, qui permet d'éviter tous les défauts d'aspect rencontrés avec les procédés d'injection directe connus et d'atteindre des ratios coeur/peau très supérieurs à ceux actuellement possibles.

Ladite peau extérieure peut avantageusement être réalisée en au moins une ou plusieurs matières thermoplastiques élastomères ayant des caractéristiques physiques distinctes. Ladite deuxième matière pour former ledit coeur peut avantageusement comporter au moins une ou plusieurs matières thermoplastiques différentes ayant des caractéristiques physiques et économiques distinctes. Parmi lesdites matières thermoplastiques différentes constituant ledit coeur, au moins une peut être expansée. Ledit coeur peut également comporter au moins une matière thermoplastique élastomère. Ladite peau extérieure de la pièce peut être réalisée au cours d'au moins une première séquence d'injection d'au moins une première matière thermoplastique élastomère. Dans certains cas, ladite première séquence peut être scindée en plusieurs sous-séquences partielles. Ledit coeur extérieur de la pièce est de préférence réalisé au cours d'au moins une deuxième séquence d'injection d'au moins une deuxième matière thermoplastique. Ladite peau extérieure de la pièce est avantageusement fermée au cours d'au moins une troisième séquence d'injection d'au moins ladite première matière thermoplastique élastomère. Ladite peau extérieure de la pièce peut être fermée de façon continue ou discontinue. Selon un mode de réalisation préféré, l'on effectue une inclusion partielle localisée d'au moins une deuxième matière thermoplastique rigide dans le moule de ladite pièce.

Ce but est également atteint par un dispositif pour la mise en oeuvre de ce procédé, selon la revendication 11.

Le dispositif peut aussi comporter un premier canal froid d'alimentation et un deuxième canal froid d'alimentation dans lesquels débouchent respectivement lesdites buses d'injection, lesdits canaux froids d'alimentation étant en communication avec deux zones distinctes de ladite empreinte, ce qui peut correspondre avantageusement à un procédé de rétro-injection.

Le dispositif peut être complété par au moins une masselotte ouverte ou obturée, raccordée à une restriction de ladite empreinte pour optimiser le remplissage de la matière de coeur dans des zones spécifiques de la pièce.

Une pièce injectée comporte des zones ayant des caractéristiques physiques différentes réalisées au moyen desdites matières thermoplastiques injectées.

Ladite pièce peut avantageusement comporter au moins un clip de fixation comportant un coeur renforcé entièrement entouré de ladite peau. Ladite pièce peut également comporter avantageusement une charnière. Pour diverses applications, la pièce peut comporter plusieurs zones ayant des colorations différentes de la peau. On peut également prévoir des boutons de commande intégrés dans la pièce. La pièce peut présenter des nervures de renfort localisées. Ces exemples ne sont pas limitatifs.

La présente invention et ses avantages seront mieux compris à la lecture de la description détaillée de plusieurs formes de mise en oeuvre du procédé, et du dispositif selon l'invention, en référence aux dessins annexés donnés à titre indicatif et non limitatif, dans lesquels :
- la figure 1 est une vue schématique et partielle représentant une première forme de réalisation d'un dispositif d'injection selon l'invention,
- la figure 2 est une vue schématique et partielle représentant une deuxième forme de réalisation d'un dispositif d'injection selon l'invention,
- la figure 3 est une vue schématique et partielle représentant une troisième forme de réalisation d'un dispositif d'injection selon l'invention,
- la figure 4 est une vue schématique et partielle représentant une quatrième forme de réalisation d'un dispositif d'injection selon l'invention,
- les figures 5A et 5B sont des vues schématiques de dessus et en coupe d'une première pièce,
- la figure 6 est une vue schématique représentant une coupe axiale d'une deuxième pièce,
- les figures 7A et 7B sont des vues schématiques de dessus et en coupe d'une troisième pièce ,
- les figures 8A, 8B et 8C sont des vues schématiques de dessus et en coupe transversale selon BB d'une quatrième pièce,
- les figures 9A et 9B sont des vues schématiques en coupe d'une cinquième pièce dans deux positions d'utilisation,
- la figuré 10 est une vue schématique et partielle d'une variante de réalisation du dispositif d'injection de la figure 1,
- les figures 11A et 11B sont des vues de détail de deux formes de seuil d'injection,
- les figures 12A et 12B sont des vues de détail du moule correspondant à un clip de fixation intégré à une pièce injectée, respectivement sans et avec l'utilisation d'une masselotte ouverte, et
- les figures 13A à 13C sont des vues de détail d'un moule à masselotte obturée respectivement selon trois phases de fonctionnement.

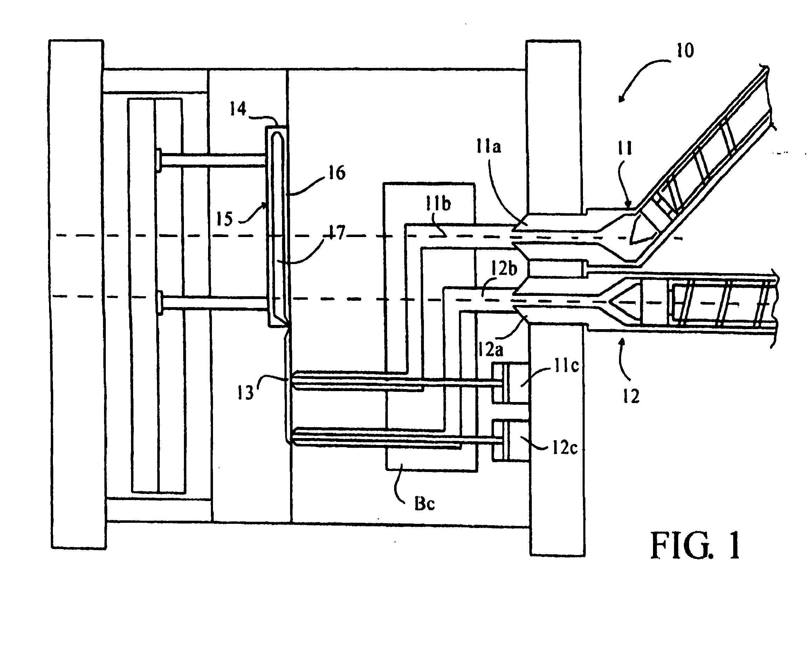

En référence à la figure 1, le dispositif 10 représenté schématiquement et partiellement comporte un premier bloc d'injection 11 et un deuxième bloc d'injection 12 ayant chacun une buse d'injection respectivement 11a et 12a qui débouchent dans deux canaux chauds d'injection respectivement 11 b et 12b. Les canaux chauds d'injection 11 b et 12b sont équipés d'un dispositif d'obturation indépendant respectivement 11c et 12c qui sont agencés pour arrêter ou laisser passer la matière thermoplastique, qui est alimentée par les deux blocs d'injection 11 et 12 et qui correspond à la matière de peau pour l'une et à la matière de coeur pour l'autre. Ces canaux chauds d'injection 11b et 12b débouchent dans un canal froid d'alimentation 13 des matières thermoplastiques qui est en communication avec une empreinte 14 en vue de la réalisation d'une pièce simple 15 comportant une peau 16 fermée et un coeur central 17 entièrement entouré de la peau 16. On dit que le remplissage de l'empreinte 14 s'effectue à coeur dans le flux, la matière de coeur étant injectée dans le même sens d'injection que la matière de peau.

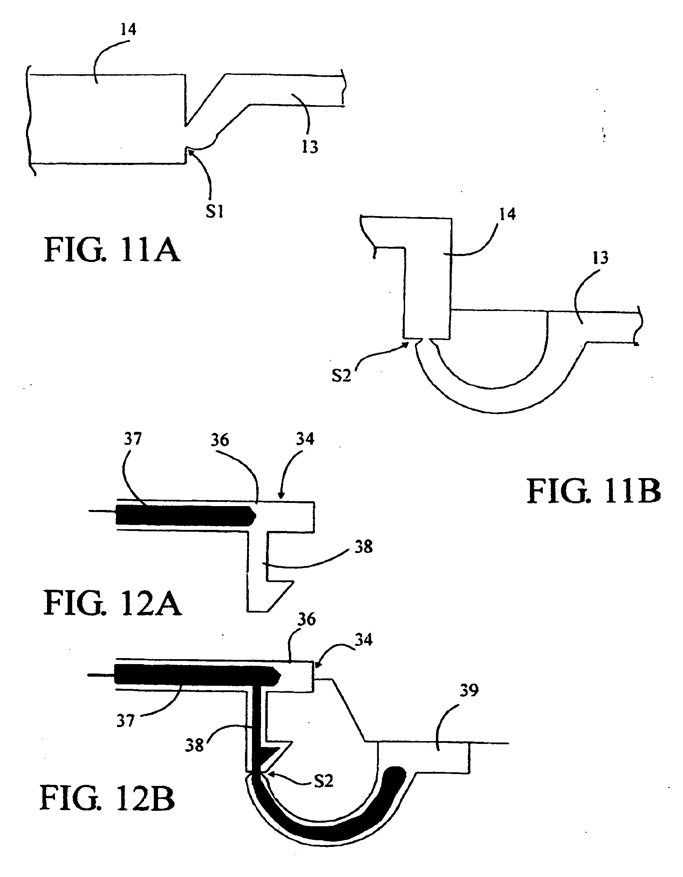

Ainsi, l'injection des matières thermoplastiques ne se fait pas en direct ou en pleine peau comme dans les procédés connus, mais indirectement par l'intermédiaire du canal froid d'alimentation 13, appelé communément « carotte », éliminé au moment du démoulage de la pièce. Ce canal froid d'alimentation 13 débouche dans l'empreinte 14 par un seuil d'injection ayant pour fonction d'orienter le flux de matière dans l'épaisseur de la pièce et non dans la face de la pièce. Tous les types de seuil d'injection peuvent être utilisés, tels que le type direct, le type sous marin S1, le type courge S2 en référence aux figures 11A et 11B, ou similaire. Cette injection indirecte permet de supprimer les problèmes d'aspect rencontrés avec les procédés d'injection directe connus et permet ainsi d'obtenir des pièces de grande qualité esthétique sans défaut d'aspect.

Le dispositif 10 représenté permet d'effectuer une injection sandwich séquencée ou simultanée appelée co-injection. Dans l'injection séquencée, on commence par injecter la matière de peau, puis avant la fin de l'injection du volume de peau, on injecte la matière de coeur pour finir le remplissage de l'empreinte 14. Le début de l'injection de la matière de coeur démarre avant la fin de l'injection de la matière de peau pour assurer une continuité du flux matières et éviter les défauts d'aspect. Dans l'injection simultanée, on commence par injecter la matière de peau, puis quasi-simultanément, on injecte la matière de coeur. Le débit d'injection de la matière de peau doit être légèrement supérieur au débit de la matière de coeur. Dans les deux cas, on effectue le compactage des matières injectées sur la matière de coeur.

Ce type d'injection permet de réaliser des pièces dont la peau, faite d'une matière thermoplastique élastomère considérée comme un matériau noble et coûteux, représente un revêtement fin et dont le coeur, fait d'une matière thermoplastique moins noble, remplit un volume important de la pièce. On a constaté que l'injection indirecte permet d'augmenter considérablement le pourcentage de matière de coeur par rapport au pourcentage de matière de peau, ayant pour effet une qualité supérieure de la pièce obtenue pour un coût matière nettement inférieur. Le procédé de l'invention permet ainsi d'atteindre un ratio coeur/peau de 80/20 même sur des pièces à géométrie complexe, alors que ce ratio est limité à 30/70 avec les procédés actuels sur ce type de pièces, ce qui représente une avancée technologique considérable.

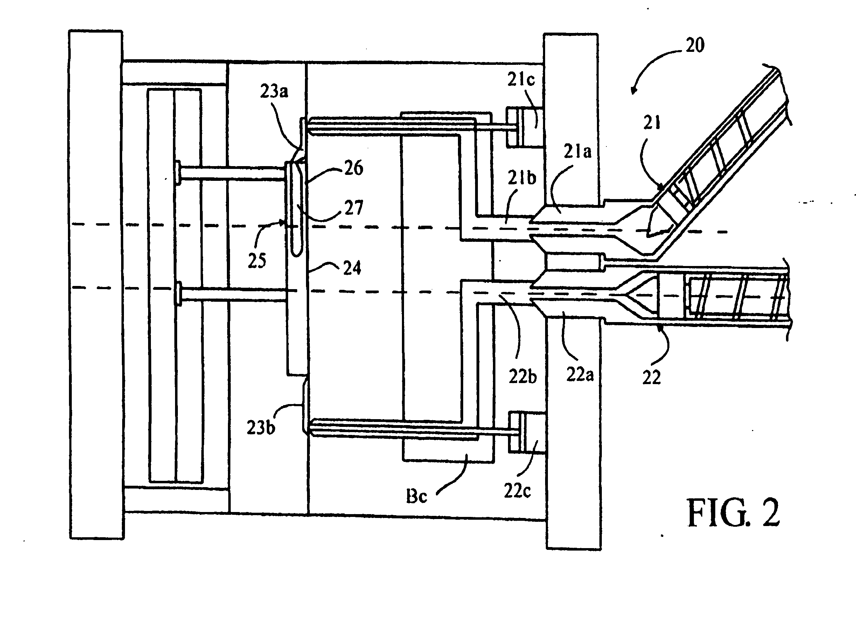

En référence à figure 2, le dispositif 20 représenté schématiquement et partiellement comporte un premier bloc d'injection 21 et un deuxième bloc d'injection 22 ayant chacun une buse d'injection respectivement 21 a et 22a qui débouchent dans deux canaux chauds d'injection respectivement 21 b et 22b. Les canaux chauds d'injection 21b et 22b sont équipés d'un dispositif d'obturation indépendant respectivement 21c et 22c qui sont agencés pour arrêter ou laisser passer la matière thermoplastique, qui est alimentée par les deux blocs d'injection 21 et 22 et qui correspond à la matière de peau pour l'une et à la matière de coeur pour l'autre. Ces canaux chauds d'injection 21b et 22b débouchent respectivement dans un premier canal froid d'alimentation 23a et un deuxième canal froid d'alimentation 23b des matières thermoplastiques, qui sont en communication avec deux zones distinctes d'une empreinte 24 en vue de la réalisation d'une pièce simple 25 comportant une peau 26 entourant en partie un coeur central 27 localisé ou un renfort inséré dans l'empreinte 24. Le dispositif 20 représenté permet d'effectuer une rétro-injection, au cours de laquelle on commence par injecter la matière de peau jusqu'au remplissage complet de l'empreinte 24, puis on injecte la matière de coeur localement dans la zone choisie, la matière de coeur refoulant la matière de peau. Dans ce cas, le compactage s'effectue sur les deux matières ou sur la matière de coeur. Cette méthode permet de rigidifier très localement ou d'obtenir des zones localisées ayant des caractéristiques spécifiques.

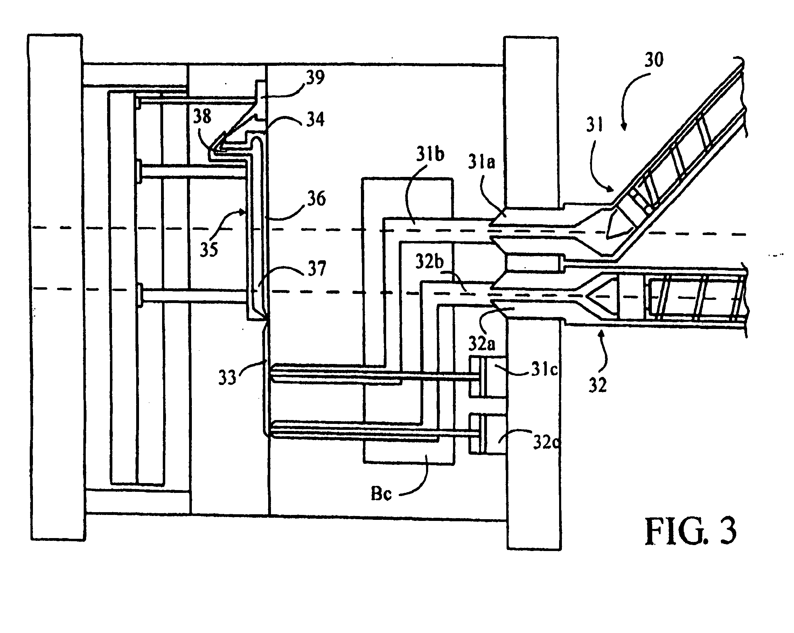

En référence à la figure 3, le dispositif 30 représenté schématiquement et partiellement comporte comme précédemment un premier bloc d'injection 31 et un deuxième bloc d'injection 32 ayant chacun une buse d'injection respectivement 31 a et 32a qui débouchent dans deux canaux chauds d'injection respectivement 31b et 32b. Les canaux chauds d'injection 31b et 32b sont équipés d'un dispositif d'obturation indépendant respectivement 31 c et 32c qui sont agencés pour arrêter ou laisser passer la matière thermoplastique, qui est alimentée par les deux blocs d'injection 31 et 32 et qui correspond à la matière de peau pour l'une et à la matière de coeur pour l'autre. Ces canaux chauds d'injection 31 b et 32b débouchent dans un canal froid d'alimentation 33 des matières thermoplastiques qui est en communication avec une empreinte 34 en vue de la réalisation d'une pièce 35 plus complexe comportant une peau 36 entourant un coeur 37. La pièce 35 est pourvue d'un crochet ou clip de fixation 38 éventuellement pourvu d'un renfort qui est lié au coeur 37 de la pièce. Ce renfort peut être réalisé avec la même matière que le coeur ou sous la forme d'un autre composant mis en place dans l'empreinte 34 avant l'injection. La partie de l'empreinte 34 qui correspond à l'extrémité du crochet est raccordée à une masselotte dite masselotte simple 39. Cette masselotte 39 est raccordée à une restriction qui délimite l'extrémité de l'empreinte 34 au niveau de la tête du clip de fixation 38. La masselotte 39 génère un excédent de matière qui est ensuite éliminé après le démoulage de la pièce. Elle permet de garantir un remplissage complet de la zone de section réduite à l'extrémité du clip de fixation 38, par exemple ou de tout autre composant de faible section, et une meilleure répartition localisée de la matière de coeur en chassant la matière de peau. Les figures 12A et 12B illustrent l'injection du clip de fixation 38 dans une empreinte 34 fermée et une empreinte 34 communiquant avec une masselotte 39 ouverte. Dans la figure 12A, la matière de peau est piégée dans les zones d'extrémité de l'empreinte 34 et du clip 38 empêchant la matière de coeur d'avancer et d'accéder au centre du clip de fixation 38. Dans la figure 12B, la zone d'extrémité de l'empreinte 34 correspondant à la tête du clip de fixation 38 communique avec une masselotte 39 ouverte par un seuil de type sous-marin, courge S2 ou direct, et par un canal dont le volume correspond sensiblement au volume de peau piégé. Lors de l'injection de la matière de coeur, la montée en pression de la matière de coeur va évacuer la matière de peau piégée dans la masselotte 39 permettant le passage de la matière de coeur au centre de la pièce et jusqu'à la tête du clip de fixation 38. Cette technique de masselotte est particulièrement adaptée pour le remplissage de clips de fixation, de nervures de renfort, c'est-à-dire de zones ayant une fonction rigide, mais aussi de coins ou de plots de fixation. En sortie de presse, les masselottes peuvent être éjectées directement lors de seuils à rupture (sous-marin ou courge) ou détachées en post traitement lors de seuils directs.

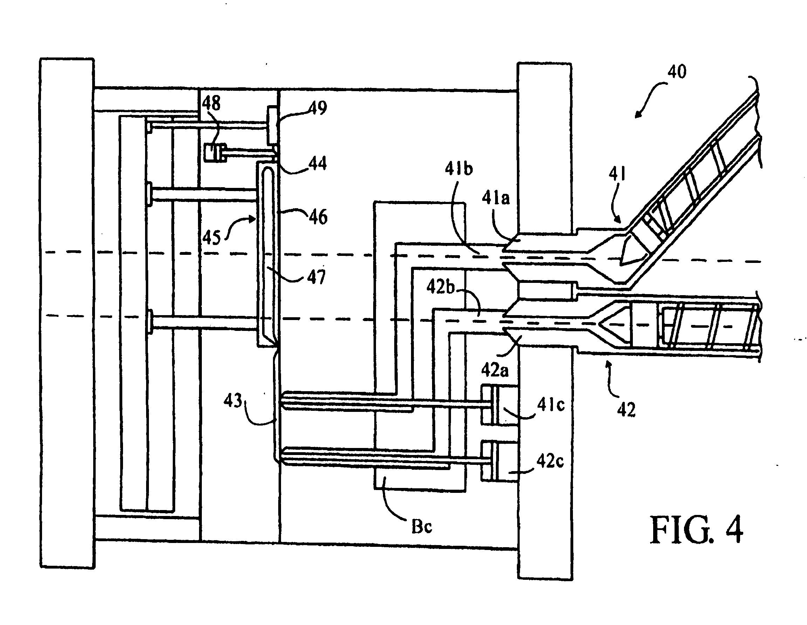

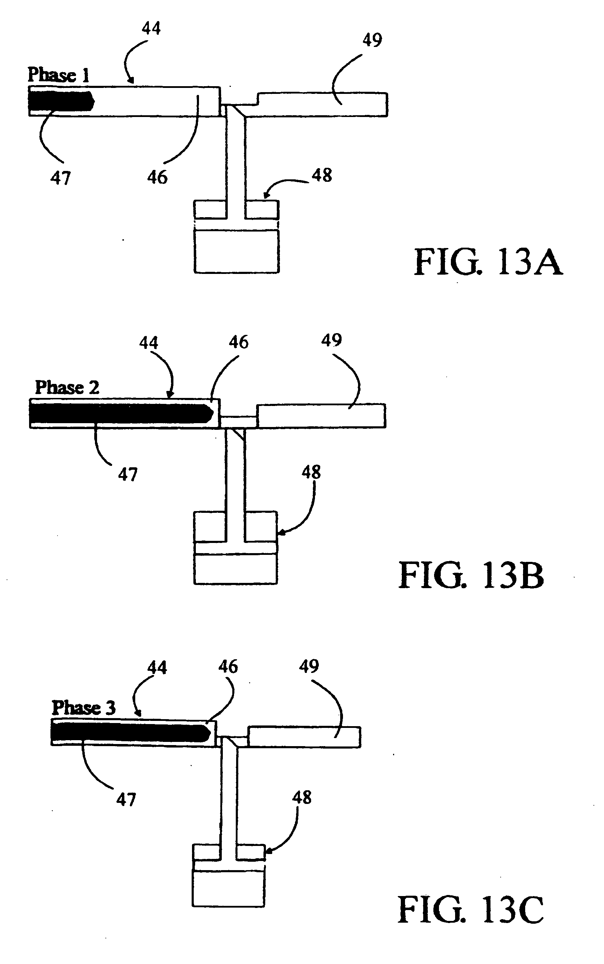

En référence à la figure 4, le dispositif 40 représenté schématiquement et partiellement comporte comme précédemment un premier bloc d'injection 41 et un deuxième bloc d'injection 42 ayant chacun une buse d'injection respectivement 41 a et 42a qui débouchent dans deux canaux chauds d'injection respectivement 41b et 42b. Les canaux chauds d'injection 41b et 42b sont équipés d'un dispositif d'obturation indépendant respectivement 41 c et 42c qui sont agencés pour arrêter ou laisser passer la matière thermoplastique, qui est alimentée par les deux blocs d'injection 41 et 42 et qui correspond à la matière de peau pour l'une et à la matière de coeur pour l'autre. Ces canaux chauds d'injection 41 b et 42b débouchent respectivement dans un canal froid d'alimentation 43 des matières thermoplastiques qui est en communication avec une empreinte 44 en vue de la réalisation d'une pièce 45 plus complexe comportant une peau 46 entourant un coeur 47. L'empreinte 44 est raccordée par l'intermédiaire d'un canal équipé d'un vérin d'obturation 48 à une masselotte dite masselotte obturée 49. La masselotte obturée 49 a la même fonction que la masselotte simple 39 de l'exemple précédent. La seule différence est que la masselotte obturée 49 est commandée par un vérin 48 qui permet de fermer l'arrivée de la matière lorsque le processus l'exige. Les figures 13A, 13B et 13C illustrent les différentes étapes de fonctionnement de cette masselotte obturée 49. Pendant l'injection de la matière de peau, le vérin 48 ferme l'accès à la masselotte 49 (phase 1). Au cours de l'injection de la matière de coeur, le vérin 48 ouvre cet accès pour permettre à la matière de coeur 47 de chasser la matière de peau 46 piégée et remplir le centre de la pièce (phase 2). Ensuite, le vérin ferme à nouveau l'accès (phase 3). Cette technique permet d'optimiser les zones de remplissage de volume relativement important et permet aussi une découpe de la masselotte 49 directement intégrée dans l'outillage. La masselotte 49 peut être couplée à l'empreinte 44 par un seuil de type sous-marin S1 ou courge S2.

La particularité du procédé de l'invention et du dispositif pour la mise en oeuvre de ce procédé est liée au fait que l'injection des matières thermoplastiques de peau et de coeur peut être commandée d'une manière indépendante dans des zones sélectionnées de la pièce et s'effectue de manière indirecte par un canal froid d'alimentation qui permet d'atteindre des ratios coeur/peau bien supérieurs à ceux obtenus par les procédés actuels. Bien que les formes de réalisation aient été représentées avec deux blocs d'injection, ce nombre n'est pas limitatif et d'autres blocs d'injection pourraient compléter le dispositif en fonction des caractéristiques recherchées pour la pièce à produire.

L'autre particularité du procédé de l'invention et du dispositif pour la mise en oeuvre de ce procédé réside dans la simplicité et la souplesse des solutions techniques proposées, permettant d'utiliser des presses standard. Les solutions décrites dans les dispositifs 10 à 40 mettent en oeuvre des canaux d'injection dits chauds. Cette technique est principalement adaptée pour des outillages mono-empreintes, centrés avec une alimentation matière sur la périphérie de la pièce. Il existe trois types de configurations du bloc chaud : des blocs chauds séparés et superposés, des blocs chauds séparés et côte à côte, ou un bloc chaud commun à double alimentation. En référence aux figures 1 à 4, les dispositifs 10 à 40 sont schématisés avec un bloc chaud Bc commun traversé par les deux canaux d'injection 11 b, 12b ; 21 b, 22b ; 31 b, 32b ; 41 b, 42b, cet exemple n'étant pas limitatif.

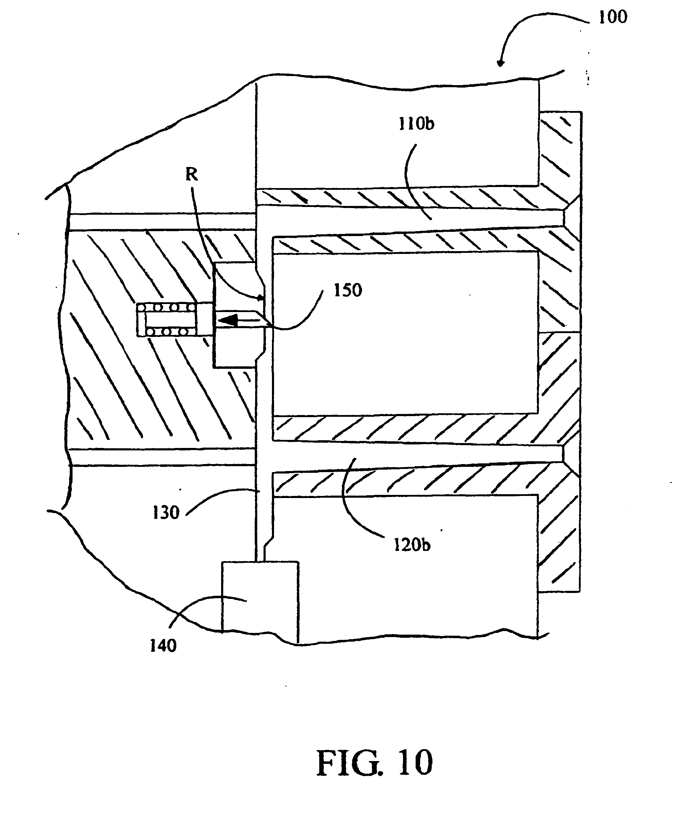

Bien entendu, le dispositif pour la mise en oeuvre du procédé de l'invention utilise la technique des canaux d'injection dits froids. Cette technique est particulièrement adaptée pour des outillages multi-empreintes et pour des outillages de petites séries pour lesquelles l'investissement en blocs chauds serait trop important. Un exemple est représenté schématiquement et partiellement à la figure 10. Le dispositif 100 comporte deux canaux froids d'injection respectivement 110b et 120b, communément appelés « carottes », alimentés par deux blocs d'injection de matière thermoplastique (non représentés) ayant chacun une buse d'injection qui correspond à la matière de peau pour l'une et à la matière de coeur pour l'autre. Ces canaux froids d'injection 110b et 120b débouchent dans un canal froid d'alimentation 130 des matières thermoplastiques qui est en communication avec une empreinte 140 en vue de la réalisation d'une pièce. Le canal froid d'alimentation 130 est équipé d'un clapet 150 agencé pour arrêter ou laisser passer la matière de coeur provenant du canal froid 110b. Lors de l'injection de la matière de peau provenant du canal froid 120b, la matière de peau est stoppée par le clapet 150 et va remplir l'empreinte 140. En fin d'injection de la matière de peau, on injecte la matière de coeur. La pression exercée par la matière de coeur sur la pente du clapet 150 va provoquer son ouverture et autoriser le passage de la matière de coeur dans le canal froid d'alimentation 130 et dans l'empreinte 140. La restriction R de la section du canal d'alimentation 130 dans la zone du clapet 150 permet d'optimiser le remplissage par le coeur. Cette technique de canaux froids est déclinable dans les quatre variantes décrites en référence aux figures 1 à 4, à savoir une injection séquentielle, une co-injection, une rétro-injection, avec ou sans masselotte ouverte ou obturée.

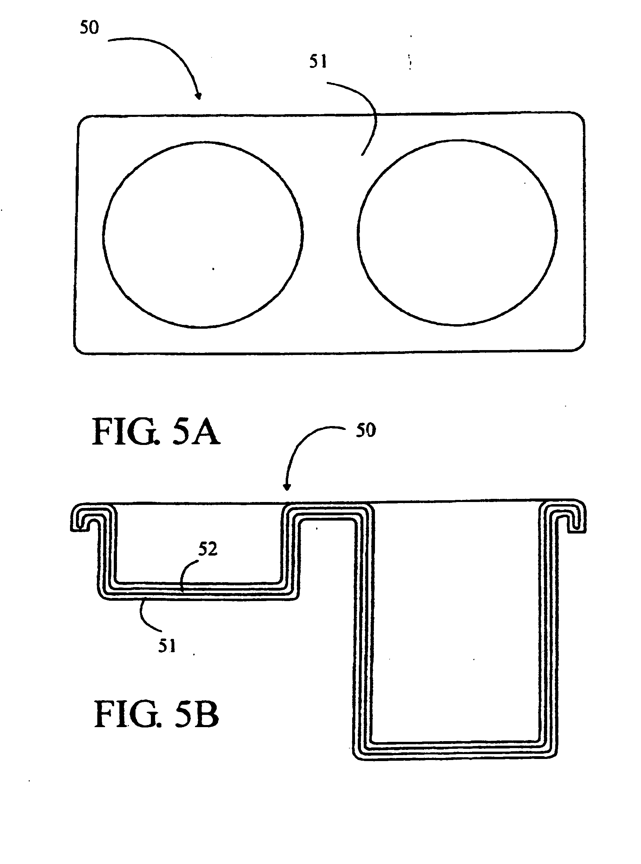

Quelques exemples de pièces réalisées par le procédé selon l'invention sont à présent décrits en référence aux figures 5 à 9, ces exemples n'ayant aucun caractère limitatif.

Les figures 5A et 5B sont des vues schématiques représentant respectivement des vues de dessus et en coupe d'une première pièce, qui est un porte gobelet 50 réalisé par le procédé d'injection sandwich de l'invention. Les parois de ce porte gobelet comportent une peau 51 et un coeur 52 qui est entièrement recouvert de la peau fermée. On notera que, malgré la faible épaisseur de la pièce, le coeur 52 s'étend sur quasiment toute la surface des parois, ce qui permet de réaliser un produit économique en utilisant un maximum de matière thermoplastique moins noble pour la réalisation du coeur 52. La technique des masselottes peut être utilisée pour optimiser le remplissage de la matière de coeur dans les coins de la pièce 50.

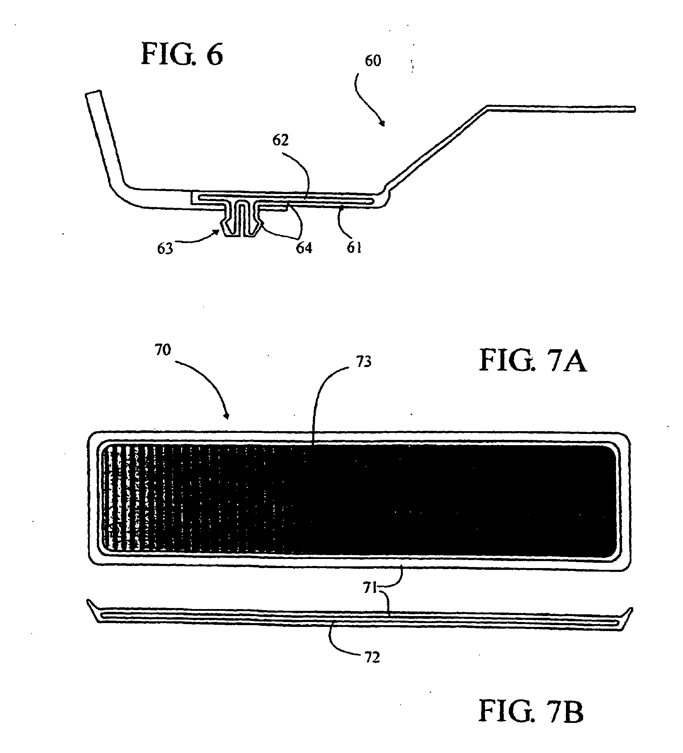

La figure 6 représente une vue partielle en coupe d'un soufflet de direction 60 pourvu d'un élément de rigidification interne 61. L'élément de rigidification 61 se compose d'un coeur central 62 qui occupe une partie de la longueur de la paroi la plus épaisse du soufflet de direction 60 et d'un clip de fixation 63. Le coeur central 62 et le clip de fixation 63 sont entourés d'une peau 64 qui est de préférence réalisée en une matière thermoplastique élastomère. La technique des masselottes permet d'optimiser le remplissage de la matière de coeur dans le clip de fixation 63.

Les figures 7A et 7B représentent une vue de dessus et une vue en coupe d'un tapis ou d'une pièce d'habillage 70 réalisée par injection sandwich qui comporte une peau extérieure 71 et un coeur 72 entièrement entouré de ladite peau 71. Dans cette réalisation, la peau 71, du moins sur sa surface supérieure 73 peut présenter des caractéristiques de couleurs nuancées, comme par exemple des dégradés ou des colorations distinctes selon les zones ainsi que des caractéristiques d'aspect, comme des nervures par exemple. On notera que la peau 71 entoure complètement le coeur 72 et que le coeur 72 s'étend très largement sous la peau 71 de telle manière que le volume de la matière, qui constitue la peau 71 et qui est coûteuse, soit réduit au maximum. De même, la technique des masselottes peut être utilisée pour optimiser le remplissage de la matière de coeur dans les coins de la pièce 70.

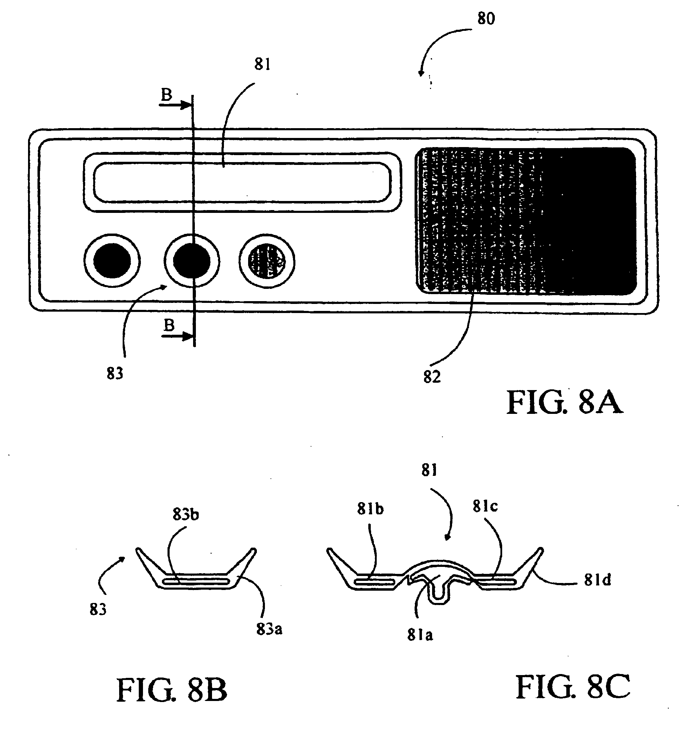

Les figures 8A, 8B et 8C illustrent une vue de dessus et deux vues en coupe d'un tapis de console de frein de parc 80 pour un véhicule automobile. Ce tapis 80 comporte par exemple une zone 81 correspondant au frein à main de parc, une zone correspondant à un vide poche 82 et une zone correspondant à des boutons de commande électrique 83. La figure 8B en particulier représente la vue en coupe transversale BB de la zone de boutons de commande 83, qui comporte une peau 83a et un coeur central 83b. La figure 8C montre une coupe transversale BB du tapis 80 à travers la zone du frein de parc 81. Une partie centrale comporte un noyau rigide 81 a et deux éléments de coeur 81 b et 81 c disposés de part et d'autre de ce noyau 81a, l'ensemble étant entouré d'une peau 81d. Les différentes zones présentent des caractéristiques physiques différentes. L'aspect, la coloration, la rigidité sont variés selon les différentes zones. Notamment la peau 83a et 81d forme une zone souple autorisant la mobilité des zones rigides 83b, 81a. Cette pièce 80 peut être obtenue en utilisant la technique de la rétro-injection.

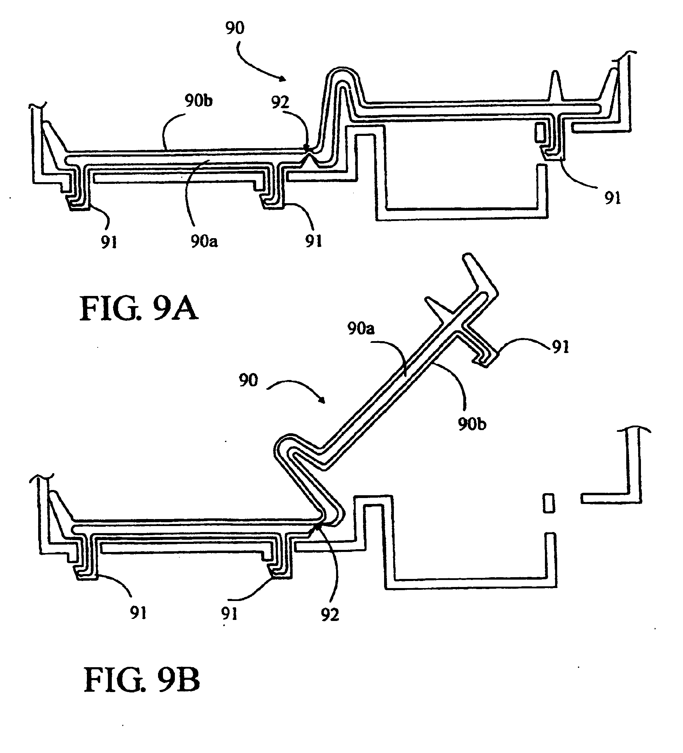

Les figures 9A et 9B représentent un tapis 90 ou une pièce d'habillage pour un véhicule automobile qui présente des clips de fixation 91 et une charnière 92 qui permet d'accéder à un rangement ou un vide-poche. On notera que le tapis 90 comporte un coeur 90a qui s'étend sur toute la surface de la pièce et une peau 90b fermée qui entoure complètement le coeur 90a. Les zones d'extrémité du tapis sont réalisées avec la matière de la peau 90b. En revanche, les clips de fixation 91 contiennent de la matière thermoplastique rigide dans leur partie centrale pour assurer une rigidification. Un élément de renfort peut être inclus dans les clips de fixation 91. On utilise la technique des masselottes pour optimiser le remplissage de la matière de coeur dans les clips de fixation 91.

## Revendications

1. Procédé de fabrication d'une pièce injectée réalisée en au moins deux matières thermoplastiques ayant des caractéristiques physiques différentes, dans lequel on injecte simultanément ou séquentiellement dans une empreinte (14, 24, 34, 44) correspondant à ladite pièce (15, 25, 35, 45) au moins une première matière thermoplastique, appelée matière de peau, pour constituer une peau extérieure (16, 26, 36, 46) de la pièce et au moins une deuxième matière thermoplastique, appelée matière de coeur, pour constituer un coeur (17, 27, 37, 47) de la pièce entouré de ladite peau, ces matières étant injectées par des buses d'injection distinctes à commande indépendante, procédé dans lequel on fait déboucher lesdites buses d'injection dans au moins un canal d'alimentation (130) qui est en communication avec ladite empreinte (14, 24,34, 44, 140) par des canaux d'injection (110b, 120b), ledit au moins un canal d'alimentation étant froid, et formant une « carotte » destinée à être éliminée au moment au moment du démoulage de ladite pièce, et agencé pour réaliser une injection indirecte desdites matières dans ladite empreinte, procédé dans lequel l'on équipe le canal froid d'alimentation (130) d'un clapet (150), **caractérisé en ce que** l'on utilise, entre les buses d'injection et le canal froid d'alimentation (130), des canaux d'injection (110b, 120b) froids et formant une « carottes » destinées à être éliminées au moment du démoulage de ladite pièce, et **en ce que** l'on utilise un clapet (150) pourvu d'une pente agencée pour, sous la pression exercée par la matière de coeur, provoquer son ouverture et autoriser le passage de la matière de coeur dans le canal froid d'alimentation (130) et dans l'empreinte (140).

2. Procédé selon la revendication 1, **caractérisé en ce que** l'on utilise au moins une masselotte (39, 49) raccordée à une restriction qui délimite l'extrémité de ladite empreinte (34, 44) et agencée pour recevoir un excédent de matière de peau lors de l'injection de la matière de coeur, destiné à être éliminé après démoulage de la pièce.

3. Procédé selon la revendication 1, **caractérisé en ce que** l'on fait déboucher lesdites buses d'injection respectivement dans un premier canal d'alimentation (23a) et dans un deuxième canal d'alimentation (23b) qui sont en communication avec deux zones distinctes de ladite empreinte (24), **en ce que** lesdits canaux d'alimentation sont froids, et **en ce que** l'on effectue une rétro-injection avec la matière de coeur sur la matière de peau agencée pour rigidifier localement la pièce ou obtenir des zones localisées de la pièce ayant des caractéristiques spécifiques.

4. Procédé selon la revendication 1, **caractérisé en ce que** l'on injecte plusieurs matières thermoplastiques ayant des caractéristiques physiques différentes, **en ce que** l'on fait déboucher lesdites buses d'injection dans plusieurs canaux d'alimentation qui sont en communication avec des zones distinctes de ladite empreinte, **en ce que** lesdits canaux d'alimentation sont froids, et **en ce que** l'on effectue des rétro-injections avec les matières de coeur sur les matières de peau agencées pour rigidifier localement la pièce ou obtenir des zones localisées de la pièce ayant des caractéristiques spécifiques.

5. Procédé selon la revendication 2, **caractérisé en ce que** l'on utilise une masselotte obturée par un vérin d'obturation agencé pour ouvrir l'accès à la masselotte et permettre à la matière de coeur de chasser la matière de peau et pour fermer cet accès et découper ladite masselotte de la pièce.

6. Procédé selon l'une quelconque des revendications précédentes, **caractérisé en ce que** ledit procédé est agencé pour effectuer une injection indirecte dans laquelle le pourcentage de matière de coeur par rapport au pourcentage de matière de peau atteint un ratio coeur/peau de 80/20.

7. Procédé selon l'une quelconque des revendications précédentes, **caractérisé en ce que** ladite peau extérieure de la pièce est réalisée au cours d'au moins une première séquence d'injection d'au moins une première matière thermoplastique.

8. Procédé selon la revendication 7, **caractérisé en ce que** ladite première séquence est scindée en plusieurs sous-séquences partielles.

9. Procédé selon l'une quelconque des revendications précédentes, **caractérisé en ce que** ledit coeur de la pièce est réalisé au cours d'au moins une deuxième séquence d'injection d'au moins une deuxième matière thermoplastique.

10. Procédé selon l'une quelconque des revendications précédentes, **caractérisé en ce que** ladite peau extérieure de la pièce est fermée au cours d'au moins une troisième séquence d'injection d'au moins ladite première matière thermoplastique.

11. Dispositif pour la mise en oeuvre du procédé selon l'une quelconque des revendications précédentes, comportant des moyens pour injecter simultanément ou séquentiellement dans une empreinte (14, 24, 34, 44, 140) correspondant à ladite pièce (15, 25, 35, 45) au moins une première matière thermoplastique, appelée matière de peau, pour constituer une peau extérieure (16, 26, 36, 46) de la pièce et au moins une deuxième matière thermoplastique, appelée matière de coeur, pour constituer un coeur (17, 27, 37, 47) de la pièce entouré de ladite peau, ces moyens comprenant des buses d'injection distinctes à commande indépendante, dispositif comportant au moins un canal d'alimentation (130) dans lequel débouchent lesdites buses d'injection par des canaux d'injection (110b, 120b), ledit au moins un canal d'alimentation étant froid, et formant une « carotte » destinée à être éliminée au moment au moment du démoulage de ladite pièce, et en communication avec ladite empreinte (14, 24, 34, 44, 140) pour réaliser une injection indirecte desdites matières dans ladite empreinte, un canal froid d'alimentation (130) étant équipé d'un clapet (150), **caractérisé en ce que** les canaux d'injection (110b, 120b), entre les buses d'injection et le canal froid d'alimentation (130), sont froids et forment des « carottes » destinées à être éliminées au moment du démoulage de ladite pièce, et **en ce que** ledit clapet (150) est pourvu d'une pente agencée pour, sous la pression exercée par la matière de coeur, provoquer son ouverture et autoriser le passage de la matière de coeur dans le canal froid d'alimentation (130) et dans l'empreinte (140).

12. Dispositif selon la revendication 11, **caractérisé en ce qu'**il comporte au moins une masselotte (39, 49) raccordée à une restriction qui délimite l'extrémité de ladite empreinte (34, 44) et agencée pour recevoir un excédent de matière de peau lors de l'injection de la matière de coeur, destiné à être éliminé après démoulage de la pièce.

13. Dispositif selon la revendication 11, **caractérisé en ce qu'**il comporte un premier canal d'alimentation (23a) et un deuxième canal d'alimentation (23b), dans lesquels débouchent respectivement lesdites buses d'injection, et **en ce que** lesdits canaux d'alimentation sont froids et en communication avec deux zones distinctes de ladite empreinte (24) agencés pour effectuer une rétro-injection avec la matière de coeur sur la matière de peau et rigidifier localement la pièce ou obtenir des zones localisées de la pièce ayant des caractéristiques spécifiques.

14. Dispositif selon la revendication 11, **caractérisé en ce qu'**il comporte plusieurs buses d'injection pour injecter plusieurs matières thermoplastiques ayant des caractéristiques physiques différentes, **en ce qu'**il comporte plusieurs canaux d'alimentation dans lesquels débouchent lesdites buses d'injection, et **en ce que** lesdits canaux d'alimentation sont froids et en communication avec des zones distinctes de ladite empreinte.

15. Dispositif selon la revendication 12, **caractérisé en ce que** ladite masselotte (49) est obturée par un vérin d'obturation (48) agencé pour ouvrir l'accès à la masselotte et permettre à la matière de coeur de chasser la matière de peau et pour fermer cet accès et découper ladite masselotte de la pièce.

## Patentansprüche

1. Herstellungsverfahren eines aus zumindest zwei thermoplastischen Materialien mit unterschiedlichen physischen Eigenschaften hergestellten Spritzgussteils, bei welchem man in ein dem besagten Teil (15, 25, 35, 45) entsprechendes Formnest (14, 24, 34, 44) gleichzeitig oder nacheinander zumindest eine erstes als Hautmaterial bezeichnetes thermoplastisches Material einspritzt, um eine Außenhaut (16, 26, 36, 46) des Teils zu bilden, und zumindest ein zweites als Kernmaterial bezeichnetes thermoplastisches Material, um einen von der besagten Haut umschlossenen Kern (17, 27, 37, 47) des Teils zu bilden, wobei diese Materialien durch unterschiedliche, unabhängig angesteuerte Düsen eingespritzt werden, Verfahren in dem man die besagten Düsen in zumindest einen Angussverteiler (130) münden lässt, der über Einspritzkanäle (110b, 120b) mit dem besagten Formnest (14, 24, 34, 44, 140) in Verbindung steht, wobei der besagte zumindest eine Angussverteiler kalt ist und einen Eingusszapfen bildet, der dazu bestimmt ist, zum Zeitpunkt des Entformens des besagten Teils entfernt zu werden, und ausgelegt ist, um ein indirektes Einspritzen der besagten Materialien in das besagte Formnest durchzuführen, Verfahren in dem man den kalten Angussverteiler (130) mit einer Klappe (150) versieht, **dadurch gekennzeichnet, dass** man zwischen den Düsen und dem kalten Angussverteiler (130) kalte Einspritzkanäle (110b, 120b) verwendet, die Eingusszapfen bilden, welche dazu bestimmt sind, zum Zeitpunkt des Entformens des besagten Teils entfernt zu werden, und dadurch, dass man eine Klappe (150) verwendet, die mit einer Schräge versehen ist, welche ausgelegt ist, um unter dem vom Kernmaterial ausgeübten Druck diese zu öffnen und den Durchgang des Kernmaterials im kalten Angussverteiler (130) und in das Formnest (140) zu erlauben.

2. Verfahren nach Anspruch 1, **dadurch gekennzeichnet, dass** man zumindest einen Steiger (39, 49) verwendet, der mit einer das Ende des besagten Formnests (34, 44) abgrenzenden Verengung verbunden ist, und ausgelegt ist, um während des Einspritzens des Kernmaterials ein Überschuss an Hautmaterial aufzunehmen, der nach dem Entformen des Teils entfernt wird.

3. Verfahren nach Anspruch 1, **dadurch gekennzeichnet, dass** man die besagten Düsen in einem ersten Angussverteiler (23a) bzw. in einem zweiten Angussverteiler (23b) münden lässt, die mit zwei verschiedenen Zonen des besagten Formnests (24) in Verbindung stehen, dadurch, dass die besagten Angussverteiler kalt sind, und dadurch, dass man mit dem Kernmaterial eine Rückeinspritzung in Bezug auf das Hautmaterial ausführt, die ausgelegt ist, um das Teil örtlich zu versteifen oder um lokalisierte Zonen des Teils mit besonderen Eigenschaften zu erhalten.

4. Verfahren nach Anspruch 1, **dadurch gekennzeichnet, dass** man mehrere thermoplastische Materialien mit unterschiedlichen physischen Eigenschaften einspritzt, dadurch, dass man die besagten Düsen in mehreren verschiedenen Angussverteilern münden lässt, die mit verschiedenen Zonen des besagten Formnests in Verbindung stehen, dadurch, dass die besagten Angussverteiler kalt sind, und dadurch, dass man mit den Kernmaterialien Rückeinspritzungen in Bezug auf die Hautmaterialien ausführt, die ausgelegt sind, um das Teil örtlich zu versteifen oder um lokalisierte Zonen des Teils mit besonderen Eigenschaften zu erhalten.

5. Verfahren nach Anspruch 2, **dadurch gekennzeichnet, dass** man einen Steiger verwendet, der mit einem Verschluss-Zylinder verschlossen wird, der ausgelegt ist, um den Zugang zum Steiger zu öffnen und dem Kernmaterial zu erlauben, das Hautmaterial zu verdrängen, und um diesen Zugang zu verschließen und den besagten Steiger vom Teil abzuschneiden.

6. Verfahren nach einem beliebigen der vorhergehenden Ansprüche, **dadurch gekennzeichnet**, das das besagte Verfahren ausgelegt ist, um eine indirekte Einspritzung auszuführen, bei der der Prozentsatz des Kernmaterials in Bezug auf den Prozentsatz des Hautmaterials ein Kern/Haut-Verhältnis von 80/20 erreicht.

7. Verfahren nach einem beliebigen der vorhergehenden Ansprüche, **dadurch gekennzeichnet**, das die besagte Außenhaut des Teils während zumindest einer ersten Einspritz-Sequenz zumindest eines ersten thermoplastischen Materials hergestellt wird.

8. Verfahren nach Anspruch 7, **dadurch gekennzeichnet, dass** die besagte erste Sequenz in mehrere Teil-Untersequenzen aufgeteilt ist.

9. Verfahren nach einem beliebigen der vorhergehenden Ansprüche, **dadurch gekennzeichnet**, das der besagte Kern des Teils während zumindest einer zweiten Einspritz-Sequenz zumindest eines zweiten thermoplastischen Materials hergestellt wird.

10. Verfahren nach einem beliebigen der vorhergehenden Ansprüche, **dadurch gekennzeichnet**, das die besagte Außenhaut des Teils während zumindest einer dritten Einspritz-Sequenz zumindest des besagten ersten thermoplastischen Materials verschlossen wird.

11. Vorrichtung für die Umsetzung des Verfahrens nach einem beliebigen der vorhergehenden Ansprüche, mit Mitteln zum gleichzeitigen oder aufeinander folgenden Einspritzen in ein dem besagten Teil (15, 25, 35, 45) entsprechendes Formnest (14, 24, 34, 44, 140) zumindest eines ersten als Hautmaterial bezeichneten thermoplastischen Materials, um eine Außenhaut (16, 26, 36, 46) des Teils zu bilden, und zumindest eines zweiten als Kernmaterial bezeichneten thermoplastischen Materials, um einen von der besagten Haut umschlossenen Kern (17, 27, 37, 47) des Teils zu bilden, wobei diese Mittel unabhängig angesteuerte Düsen betragen, Vorrichtung, die zumindest einen Angussverteiler (130) beträgt, in dem die besagten Düsen über Einspritzkanäle (110b, 120b) münden, wobei der besagte zumindest eine Angussverteiler kalt ist und einen Eingusszapfen bildet, der dazu bestimmt ist, zum Zeitpunkt des Entformens des besagten Teils entfernt zu werden, und mit dem besagten Formnest (14, 24, 34, 44, 140) in Verbindung steht, um ein indirektes Einspritzen der besagten Materialien in das besagte Formnest durchzuführen, wobei ein kalter Angussverteiler (130) mit einer Klappe (150) versehen ist, **dadurch gekennzeichnet, dass** die Einspritzkanäle (110b, 120b) zwischen den Düsen und dem kalten Angussverteiler (130) kalt sind und Eingusszapfen bilden, die dazu bestimmt sind, zum Zeitpunkt des Entformens des besagten Teils entfernt zu werden, und dadurch, dass die besagte Klappe (150) mit einer Schräge versehen ist, die ausgelegt ist, um unter dem vom Kernmaterial ausgeübten Druck diese zu öffnen und den Durchgang des Kernmaterials im kalten Angussverteiler (130) und in das Formnest (140) zu erlauben.

12. Vorrichtung nach Anspruch 11, **dadurch gekennzeichnet, dass** sie zumindest einen Steiger (39, 49) beträgt, der mit einer das Ende des besagten Formnests (34, 44) abgrenzenden Verengung verbunden ist und ausgelegt ist, um während des Einspritzens des Kernmaterials ein Überschuss an Hautmaterial aufzunehmen, der nach dem Entformen des Teils entfernt wird.

13. Vorrichtung nach Anspruch 11, **dadurch gekennzeichnet, dass** sie einen ersten Angussverteiler (23a) und einen zweiten Angussverteiler (23b) beträgt, in denen jeweils eine der besagten Düsen mündet, und dadurch, dass die besagten Angussverteiler kalt sind und mit zwei verschiedenen Zonen des besagten Formnests (24) in Verbindung stehen und ausgelegt sind, um mit dem Kernmaterial eine Rückeinspritzung in Bezug auf das Hautmaterial auszuführen, und das Teil örtlich zu versteifen oder lokalisierte Zonen des Teils mit besonderen Eigenschaften zu erhalten.

14. Vorrichtung nach Anspruch 11, **dadurch gekennzeichnet, dass** sie mehrere Düsen beträgt, um mehrere thermoplastische Materialien mit unterschiedlichen physischen Eigenschaften einzuspritzen, dadurch, dass sie mehrere Angussverteiler beträgt, in denen die besagten Düsen münden, und dadurch, dass die besagten Angussverteiler kalt sind und mit verschiedenen Zonen des besagten Formnests in Verbindung stehen.

15. Vorrichtung nach Anspruch 12, **dadurch gekennzeichnet, dass** der besagte Steiger (49) mit einem Verschluss-Zylinder (48) verschlossen wird, der ausgelegt ist, um den Zugang zum Steiger zu öffnen und dem Kernmaterial zu erlauben, das Hautmaterial zu verdrängen, und um diesen Zugang zu verschließen und den besagten Steiger vom Teil abzuschneiden.

## Claims

1. Method for manufacturing an injected part made out of at least two thermoplastic materials having different physical characteristics, wherein one injects simultaneously or sequentially in a cavity (14, 24, 34, 44) corresponding to said part (15, 25, 35, 45) at least one first thermoplastic material called skin material, to form an external skin (16, 26, 36, 46) of the part and at least one second thermoplastic material called core material, to form a core (17, 27, 37, 47) of the part surrounded by said skin, these materials being injected by separate, individually controlled injection nozzles, method wherein one lets said injection nozzles open into at least one runner (130) that is in communication with said cavity (14, 24, 34, 44, 140) through injection channels (110b, 120b), said at least one runner being cold and forming a sprue intended to be removed when demolding said part, and arranged so as to perform an indirect injection of said materials in said cavity, method wherein one provides the cold runner (130) with a shutter(150), **characterized in that** one uses, between the injection nozzles and the cold runner (130), cold injection channels (110b, 120b) forming sprues intended to be removed when demolding said part, and **in that** one uses a shutter (150) provided with a slope arranged to open it under the pressure exerted by the core material and permit the passage of the core material in the cold runner (130) and in the cavity (140).

2. Method according to claim 1, **characterized in that** one uses at least one riser (39, 49) connected to a restriction that delimits the end of said cavity (34, 44) and arranged to receive, during the injection of the core material, excess skin material that is intended to be removed after demolding the part.

3. Method according to claim 1, **characterized in that** one lets said injection nozzles open respectively into a first runner (23a) and into a second runner (23b), which are in communication with two different areas of said cavity (24), **in that** said runners are cold, and **in that** one performs a retro-injection with the core material with respect to the skin material in order to stiffen the part locally or to obtain localized areas of the part with specific characteristics.

4. Method according to claim 1, **characterized in that** one injects several thermoplastic materials having different physical characteristics, **in that** one lets said injection nozzles open into several runners that are in communication with different areas of said cavity, **in that** said runners are cold, and **in that** one performs retro-injections with the core materials with respect to the skin materials in order to stiffen the part locally or to obtain localized areas of the part with specific characteristics.

5. Method according to claim 2, **characterized in that** one uses a riser closed by a closing cylinder arranged to open the access to the riser and allow the core material to expel the skin material, and to close this access and cut off said riser from the part.

6. Method according to any of the previous claims, **characterized in that** said process is arranged to perform an indirect injection wherein the core material percentage versus the skin material percentage reaches a core/skin ratio of 80/20.

7. Method according to any of the previous claims, **characterized in that** said external skin of the part is realized during at least one first injection sequence of at least one first thermoplastic material.

8. Method according to claim 7, **characterized in that** said first sequence is divided into several partial sub-sequences.

9. Method according to any of the previous claims, **characterized in that** said core of the part is realized during at least one second injection sequence of at least one second thermoplastic material.

10. Method according to any of the previous claims, **characterized in that** said external skin of the part is closed during at least one third injection sequence of at least said first thermoplastic material.

11. Device for implementing the method according to any of the previous claims, including means to inject simultaneously or sequentially in a cavity (14, 24, 34, 44, 140) corresponding to said part (15, 25, 35, 45) at least one first thermoplastic material called skin material, to form an external skin (16, 26, 36, 46) of the part and at least one second thermoplastic material called core material, to form a core (17, 27, 37, 47) of the part surrounded by said skin, these means including separate, individually controlled injection nozzles, device including at least one runner (130) wherein said injection nozzles open into through injection channels (110b, 120b), said at least one runner being cold and forming a sprue intended to be removed when demolding said part, and in communication with said cavity (14, 24, 34, 44, 140) so as to perform an indirect injection of said materials in said cavity, a cold runner (130) being provided with a shutter (150), **characterized in that** the injection channels (110b, 120b) between the injection nozzles and the cold runner (130) are cold and form sprues intended to be removed when demolding said part, and **in that** said shutter (150) is provided with a slope arranged to open it under the pressure exerted by the core material and permit the passage of the core material in the cold runner (130) and in the cavity (140).

12. Device according to claim 11, **characterized in that** it includes at least one riser (39, 49) connected to a restriction that delimits the end of said cavity (34, 44) and arranged to receive, during the injection of the core material, excess skin material that is intended to be removed after demolding the part.

13. Device according to claim 11, **characterized in that** it includes a first runner (23a) and a second runner (23b) wherein said injection nozzles open into respectively, and **in that** said runners are cold and in communication with two different areas of said cavity (24), and arranged to perform a retro-injection with the core material with respect to the skin material in order to stiffen the part locally or to obtain localized areas of the part with specific characteristics.

14. Device according to claim 11, **characterized in that** it includes several injection nozzles to inject several thermoplastic materials having different physical characteristics, **in that** it includes several runners wherein said injection nozzles open into, and **in that** said runners are cold and in communication with different areas of said cavity.

15. Device according to claim 12, **characterized in that** said riser (49) is closed by a closing cylinder (48) arranged to open the access to the riser and allow the core material to expel the skin material, and to close this access and cut off said riser from the part.
